# EUROPEAN PATENT APPLICATION

(11) **EP 2 654 347 A1**
(43) Date of publication of application: **23.10.2013**
(21) Application number: 11855141.5
(22) Date of filing: 30.11.2011
(51) Int. Cl.: H04W 52/00, H04W 72/04

(54) **METHOD AND DEVICE FOR FEEDING BACK INFORMATION ABOUT UPLINK CLOSED LOOP TRANSMIT DIVERSITY**

(30) Priority: 04.01.2011 CN 201110000375
(71) Applicant: ZTE Corporation, Shenzhen, Guangdong 518057 (CN)
(72) Inventor: LIU, Junqiang, Shenzhen Guangdong 518057 (CN); YANG, Guang, Shenzhen Guangdong 518057 (CN); ZHANG, Chi, Shenzhen Guangdong 518057 (CN); LIU, Shuhui, Shenzhen Guangdong 518057 (CN); CHANG, Yongyu, Shenzhen Guangdong 518057 (CN)
(74) Representative: Reichert, Sabine
(86) International application number: PCT/CN2011/083235
(87) International publication number: WO 2012/092801

(57) **Abstract**

The present disclosure discloses an information feedback method for uplink closed loop transmission diversity, which includes: a base station allocates each Fractional Dedicated Physical Channel (F-DPCH) to at least one user; and the base station takes at least one F-DPCH as a feedback channel and arranges information of different users in each said F-DPCH by time division multiplexing, wherein information of at least one user in the F-DPCH includes feedback information of the uplink closed loop transmission diversity and an uplink Transmission Power Control (TPC) command. The present disclosure further discloses an information feedback device for uplink closed loop transmission diversity. Through the solution of the present disclosure, information feedback of the uplink closed loop transmission diversity can be implemented, when the information is a weight, the problem of weight feedback of the uplink closed loop transmission diversity is solved, and a user side of a High Speed Uplink Packet Access (HSUPA) system is facilitated to complete an operation of transmission diversity.

## Description

### TECHNICAL FIELD

The present disclosure relates to a weight feedback technology, and in particular to an information feedback method and device for uplink closed loop transmission diversity.

### BACKGROUND

High Speed Uplink Packet Access (HSUPA) is an enhanced technique introduced in 3GPP (3^{rd} Generation Partnership Project) Release 6 to improve the uplink transmission rate and to enhance and expand the performance of a Wideband Code Division Multiple Access (WCDMA) uplink system. The HSUPA improves the uplink transmission performance by introducing fast uplink Hybrid Automatic Repeat Request (HARQ), an uplink scheduling based on a NodeB and multi-code transmission simpler than the prior release, so that the maximum peak uplink transmission rate can reach 5.76 Mbps.

A multi-antenna technology is to implement a higher system capacity, a wider cell coverage and a better quality of service by using multiple antennas at a transmitting side and/or a receiving side. The multiple antennas at the transmitting side and/or the receiving side can be both used for implementing transmission diversity or receiving diversity and implementing spatial multiplexing. Wherein, a transmission diversity technology is an anti-fading technique for transmitting at least two signals bearing the same information at a transmitting side in the field of wireless communications. The signals bearing the same information are from at least two independent signal sources. The transmission diversity technology can be divided into three basic types: spatial, frequency and time, or the combination thereof according to the structure and statistical characteristics of the transmitted signal sample therefrom and the difference in the wireless resources occupied thereby. The spatial diversity refers to implementing the anti-fading function by using the irrelevance in statistical characteristics of signals from different transmission places (spatial locations) which reach the receiving side through a channel. The frequency diversity refers to implementing the anti-fading (frequency selectivity) function by using the statistical irrelevance of signals in different frequency bands which pass through a fading channel, namely the difference in the fading statistical characteristics in different frequency bands. The implementation of the frequency diversity can be to modulate information to be transmitted on carrier waves of irrelevant frequencies respectively for transmission. The time diversity refers to implementing the resistance to time selective fading by using one random fading signal when a time interval of sampling points is large enough (greater than a coherence time of a transmission channel) the fading between the sample points is irrelevant each other in statistics, namely, using the difference in the fading statistical characteristics of time.

The transmission diversity technology is divided into an open loop transmission diversity mode and a closed loop transmission diversity mode according to whether the receiving side needs to feed back a parameter required by the diversity to the transmitting side. In the open loop transmission diversity mode, the receiving side does not feed back any additional information related to transmission to the transmitting side, and the transmitting side itself can complete the transmission diversity by a corresponding coding technology (such as a simple space-time coding). In the closed loop transmission diversity mode, the receiving side needs to feed back one parameter (such as a pre-coding vector indication required by the transmission diversity) related to the transmission diversity to the transmitting side by a feedback channel, and the transmitting side completes the transmission diversity using the feedback information after receiving the parameter.

In the 3GPP Release 10, the standard (TR25.863) is available for the uplink open loop transmission diversity for the user of the HSUPA system, but related contents of the closed loop transmission diversity are not yet determined at present. Due to the introduction of the closed loop transmission diversity, the base station needs to feed back the weight information required by the transmission diversity to the user under the condition of transmitting a pre-code; therefore, it is necessary to solve the problem of weight feedback of the uplink closed loop transmission diversity.

### SUMMARY

In view of the aforementioned problem, the main purpose of the present disclosure is to provide an information feedback method and device for uplink closed loop transmission diversity, being capable of implementing information feedback for the uplink closed loop transmission diversity, which solves the problem of weight feedback of the uplink closed loop transmission diversity and facilitates a user of an HSUPA system to complete an operation of transmission diversity.

To achieve the aforementioned purpose, the technical solution of the present disclosure is implemented as follows.

The information feedback method for the uplink closed loop transmission diversity according to the present disclosure includes:
a base station allocates each Fractional Dedicated Physical Channel (F-DPCH) to at least one user; and
the base station takes at least one F-DPCH as a feedback channel and arranges information of different users in each said F-DPCH by time division multiplexing, wherein information of at least one user in the F-DPCH includes feedback information of the uplink closed loop transmission diversity and an uplink Transmission Power Control (TPC) command.

In the aforementioned solution, the feedback information of the uplink closed loop transmission diversity may include a feedback weight of the uplink closed loop transmission diversity.

In the aforementioned solution, a spreading factor of the F-DPCH may be 128 or 256; and
a bit number of the feedback information of the uplink closed loop transmission diversity may be 2 or 3 bits.

In the aforementioned solution, the method may further include: the base station transmits the feedback information of the uplink closed loop transmission diversity and the uplink TPC command of the same user one after another.

In the aforementioned solution, the transmitting the feedback information of the uplink closed loop transmission diversity and the uplink TPC command of the same user one after another may include: the feedback information of the uplink closed loop transmission diversity is transmitted before the uplink TPC command;
or, the uplink TPC command is transmitted before the feedback information of the uplink closed loop transmission diversity;
or, bits of the feedback information of the uplink closed loop transmission diversity and bits of the TPC command are transmitted alternately.

In the aforementioned solution, the method may further include: the base station transmits the F-DPCH according to a timing reference signal.

The information feedback device for the uplink closed loop transmission diversity according to the present disclosure includes: an allocation module and a feedback module, wherein
the allocation module is configured to allocate each F-DPCH to at least one user; and
the feedback module is configured to take at least one F-DPCH as a feedback channel and arrange information of different users in each F-DPCH by time division multiplexing, wherein information of at least one user in the F-DPCH includes the feedback information of the uplink closed loop transmission diversity and an uplink TPC command.

In the aforementioned solution, the feedback module may be further configured to transmit the feedback information of the uplink closed loop transmission diversity and the uplink TPC command of the same user one after another.

In the aforementioned solution, the feedback module may be specifically configured to transmit the feedback information of the uplink closed loop transmission diversity before the uplink TPC command;
or, transmit the uplink TPC command before the feedback information of the uplink closed loop transmission diversity;
or, transmit bits of the feedback information of the uplink closed loop transmission diversity and bits of the TPC command alternately.

In the aforementioned solution, the feedback module may be further configured to transmit the F-DPCH according to a timing reference signal.

By means of the information feedback method and the information feedback device for the uplink closed loop transmission diversity according to the present disclosure, the base station allocates each F-DPCH to at least one user; and takes at least one F-DPCH as a feedback channel and arranges information of different users in each said F-DPCH by time division multiplexing, wherein information of at least one user in the F-DPCH includes the feedback information of the uplink closed loop transmission diversity and the uplink TPC command; in this way, information feedback of the uplink closed loop transmission diversity can be implemented, when the information is a weight, the problem of weight feedback of the uplink closed loop transmission diversity is solved, and a user side of an HSUPA system is facilitated to complete the operation of transmission diversity.

### BRIEF DESCRIPTION OF THE DRAWINGS

Fig. 1 is a schematic diagram showing a frame structure and a timeslot structure of an F-DPCH according to the related art;
Fig. 2 is a schematic diagram showing time division multiplexing by which an F-DPCH is shared by multiple users when closed loop transmission diversity is not introduced according to the related art;
Fig. 3 is a flowchart of an information feedback method for uplink closed loop transmission diversity according to the present disclosure;
Fig. 4 is a schematic diagram showing that a weight is transmitted before TPC when the spreading factor of an F-DPCH is 256 according to the present disclosure;
Fig. 5 is a schematic diagram showing that a weight is transmitted before TPC when the spreading factor of an F-DPCH is 128 according to the present disclosure;
Fig. 6 is a schematic diagram showing that TPC is transmitted before a weight when the spreading factor of an F-DPCH is 256 according to the present disclosure;
Fig. 7 is a schematic diagram showing that TPC is transmitted before a weight when the spreading factor of an F-DPCH is 128 according to the present disclosure;
Fig. 8 is a schematic diagram showing that TPC and a weight are transmitted alternately when the spreading factor of an F-DPCH is 256 according to the present disclosure;
Fig. 9 is a schematic diagram showing that TPC and a weight are transmitted alternately when the spreading factor of an F-DPCH is 128 according to the present disclosure;
Fig. 10 is a schematic diagram showing a time sequence in which a weight is transmitted before TPC by time division multiplexing when a 4-weight feedback codebook is selected and the spreading factor of an F-DPCH is 256 according to the present disclosure;
Fig. 11 is a schematic diagram showing a time sequence in which weight is transmitted before TPC by time division multiplexing when a 4-weight feedback codebook is selected and the spreading factor of an F-DPCH is 128 according to the present disclosure;
Fig. 12 is a schematic diagram showing time division multiplexing by which an F-DPCH is shared by multiple users when a 4-weight feedback codebook is selected and the spreading factor of an F-DPCH is 256 according to the present disclosure;
Fig. 13 is a schematic diagram showing time division multiplexing by which an F-DPCH is shared by multiple users when a 4-weight feedback codebook is selected and the spreading factor of an F-DPCH is 128 according to the present disclosure;
Fig. 14 is a schematic diagram showing a time sequence in which a weight is transmitted before TPC by time division multiplexing when an 8-weight feedback codebook is selected and the spreading factor of an F-DPCH is 256 according to the present disclosure;
Fig. 15 is a schematic diagram showing a time sequence in which a weight is transmitted before TPC by time division multiplexing when an 8-weight feedback codebook is selected and the spreading factor of an F-DPCH is 128 according to the present disclosure; and
Fig. 16 is a structure diagram of an information feedback device for uplink closed loop transmission diversity according to the present disclosure.

### DETAILED DESCRIPTION

In order to solve the problem of weight feedback of uplink closed loop transmission diversity, the present disclosure needs to determine a proper feedback channel for bearing feedback weight information in a system, and design a channel time-slot format and a transmission way for the channel according to the bit number of feedback. There are mainly two implementation ways for selecting a channel for bearing a feedback weight: one way is to develop a new channel for transmission of the feedback weight, and the other way is to multiplex a channel having existed in the existing 3GPP Release 10 protocol for transmission of the feedback weight. Since designing a new channel is higher in cost and involves a large change on the 3GPP Release 10 protocol, the present disclosure mainly depends on the second implementation way, namely, using an existing channel as the feedback channel for the feedback weight. By estimating all channels in the standard, the present disclosure adopts an F-DPCH as the feedback channel.

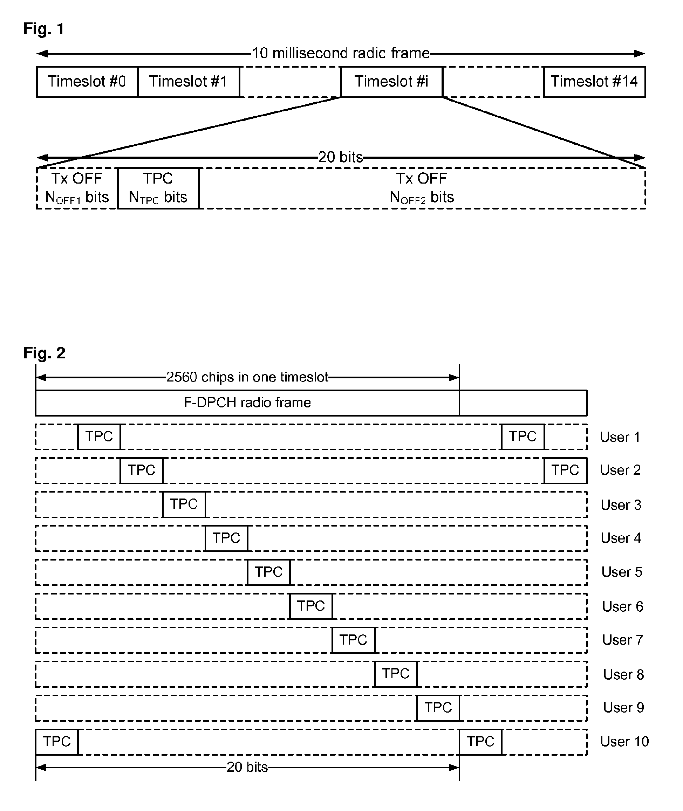

The F-DPCH is a downlink physical channel standardized in the 3GPP Release 6. The design basis of the F-DPCH is that multiple users multiplex the same channelized code resource by Time Division Multiplexing (TDM). The F-DPCH is a channel shared by multiple users from a channelized code standpoint; whereas, observed from a time domain, each user using the same channel only occupies specified transmission moments which are not overlapped in a timeline. Therefore, the F-DPCH is essentially a dedicated channel, which also is the reason why the F-DPCH belongs to the dedicated channel in the existing protocol. In the related art, the F-DPCH uses a single fixed spreading factor (SF (Spreading Factor) =256), with the frame structure and the timeslot structure shown in Fig. 1; the F-DPCH is only used for transmitting a TPC command of 2 bits for power control and can bear TPC commands of 10 users within a timeslot; at the moment, time division multiplexing of the F-DPCH is shown in Fig. 2, and related parameters of the timeslot structure of the F-DPCH and distribution of the bit number in each field are shown in Table 1.

**Table 1**

| Timeslot structure #i | Channel bit rate (kbps) | Channel symbol rate (ksps) | Spreading factor | Bit number in each timeslot | Bit number in each timeslot N_{OFF1} | Bit number in each timeslot N_{TPC} | Bit number in each timeslot N_{OFF2} |
|---|---|---|---|---|---|---|---|
| 0 | 3 | 1.5 | 256 | 20 | 2 | 2 | 16 |
| 1 | 3 | 1.5 | 256 | 20 | 4 | 2 | 14 |
| 2 | 3 | 1.5 | 256 | 20 | 6 | 2 | 12 |
| 3 | 3 | 1.5 | 256 | 20 | 8 | 2 | 10 |
| 4 | 3 | 1.5 | 256 | 20 | 10 | 2 | 8 |
| 5 | 3 | 1.5 | 256 | 20 | 12 | 2 | 6 |
| 6 | 3 | 1.5 | 256 | 20 | 14 | 2 | 4 |
| 7 | 3 | 1.5 | 256 | 20 | 16 | 2 | 2 |
| 8 | 3 | 1.5 | 256 | 20 | 18 | 2 | 0 |
| 9 | 3 | 1.5 | 256 | 20 | 0 | 2 | 18 |

The basic idea of the present disclosure is: a base station allocates each F-DPCH to at least one user; and the base station takes at least one F-DPCH as a feedback channel and arranges information of different users in each said F-DPCH by time division multiplexing; and information of at least one user in the F-DPCH includes feedback information of the uplink closed loop transmission diversity and an uplink TPC command.

The present disclosure is further described in detail below with reference to the accompanying drawings and embodiments.

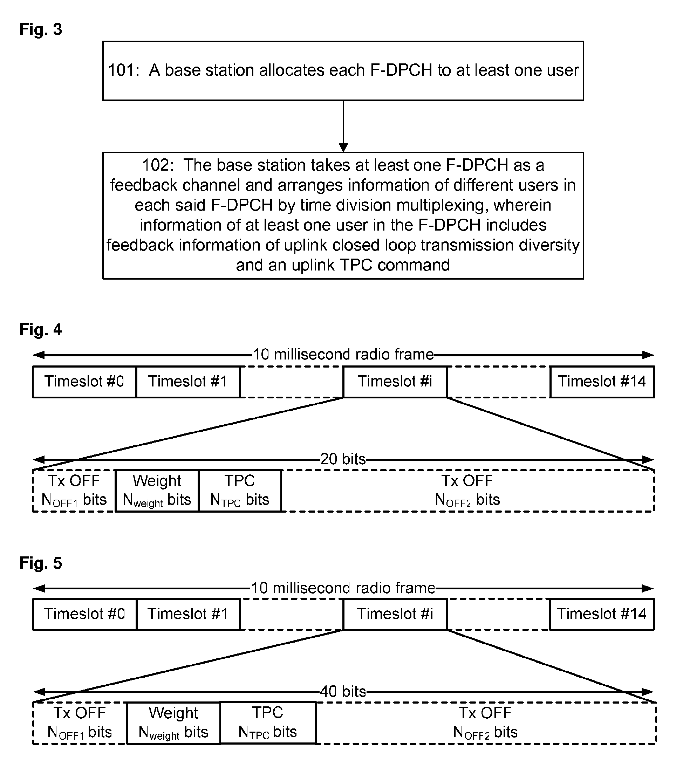

As shown in Fig. 3, an information feedback method for uplink closed loop transmission diversity according to the present disclosure includes the following steps:
Step 101: a base station allocates each F-DPCH to at least one user; and

Step 102: the base station takes at least one F-DPCH as a feedback channel and arranges information of different users in each said F-DPCH by time division multiplexing, wherein information of at least one user in the F-DPCH includes feedback information of the uplink closed loop transmission diversity and the uplink TPC command.

Here, the feedback information of the uplink closed loop transmission diversity includes a feedback weight of the uplink closed loop transmission diversity and the like;
the spreading factor of the F-DPCH is 128 or 256; and the bit number of the feedback information of the uplink closed loop transmission diversity can be 2 or 3 bits;
the at least one user is at least one user having a capability of receiving the feedback information; and the base station finds that a user has the capability of receiving the feedback information according to a pilot signal of the user, and configures information feedback for the user.

Further, the step also includes: the base station transmits the feedback information of the uplink closed loop transmission diversity and the uplink TPC command of the same user one after another.

Further, the transmitting the feedback information of the uplink closed loop transmission diversity and the uplink TPC command of the same user one after another specifically includes: the feedback information of the uplink closed loop transmission diversity is transmitted before the uplink TPC.

The feedback information of the uplink closed loop transmission diversity will be described below taking a feedback weight of the uplink closed loop transmission diversity as an example; as shown in Fig. 4, when the spreading factor of the F-DPCH is 256, the feedback weight of the uplink closed loop transmission diversity in a timeslot #i is represented by a weight and has N_{weight} bits, the TPC command is represented by TPC and has N_{TPC} bits, and it can be seen that the weight is transmitted before the TPC; in addition, as shown in Fig. 5, when the spreading factor of the F-DPCH is 128, it can also be seen that the weight is transmitted before the TPC.

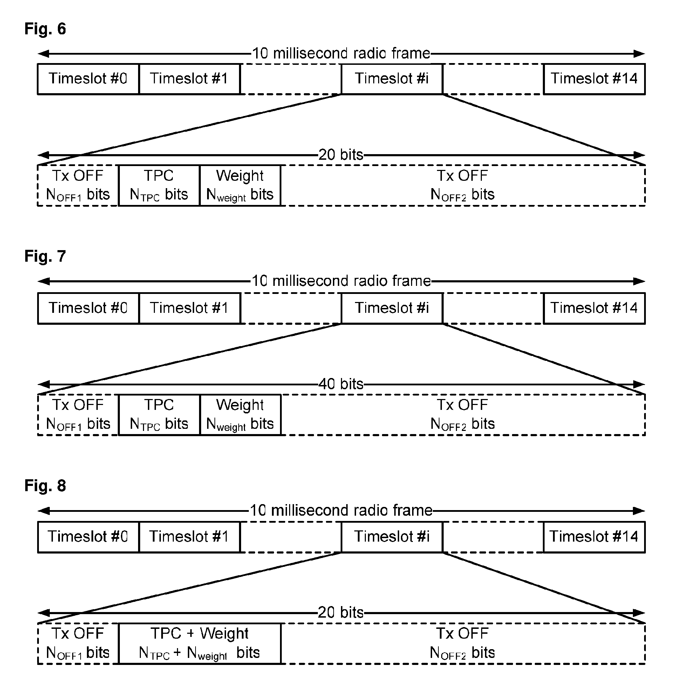

Further, the transmitting the feedback information of the uplink closed loop transmission diversity and the uplink TPC command of the same user one after another specifically includes: the uplink TPC command is transmitted before the feedback information of the uplink closed loop transmission diversity; and
the feedback information of the uplink closed loop transmission diversity will be described below taking a feedback weight of the uplink closed loop transmission diversity as an example; as shown in Fig. 6, when the spreading factor of the F-DPCH is 256, the feedback weight of the uplink closed loop transmission diversity in a timeslot #i is represented by a weight and has N_{weight} bits, the TPC command is represented by TPC and has N_{TPC} bits, and it can be seen that the TPC is transmitted before the weight; in addition, as shown in Fig. 7, when the spreading factor of the F-DPCH is 128, it can also be seen that the TPC is transmitted before the weight.

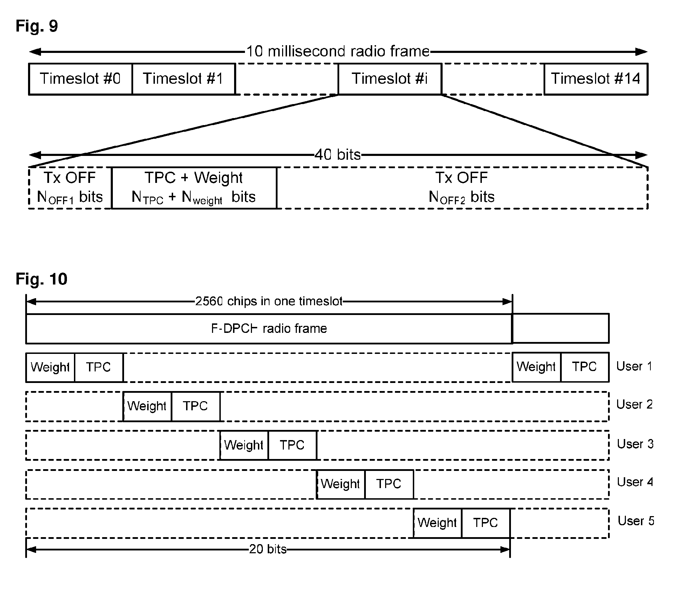

Further, the transmitting bits of the feedback information of the uplink closed loop transmission diversity and bits of the uplink TPC command of the same user one after another specifically includes: the bits of the feedback information of the uplink closed loop transmission diversity and bits of the TPC command are transmitted alternately; and
the feedback information of the uplink closed loop transmission diversity will be described below taking a feedback weight of the uplink closed loop transmission diversity as an example; as shown in Fig. 8, when the spreading factor of the F-DPCH is 256, the feedback weight of the uplink closed loop transmission diversity in a timeslot #i is represented by a weight and has N_{weight} bits, the TPC command is represented by TPC and has N_{TPC} bits, and the TPC and the weight of each bit are transmitted alternately; in addition, as shown in Fig. 9, when the spreading factor of the F-DPCH is 128, similarly, the TPC and the weight of each bit are transmitted alternately.

Further, the step also includes: the base station transmits the F-DPCH according to a timing reference signal to feed back the feedback information of the uplink closed loop transmission diversity and the uplink TPC command to at least one user.

When the bit number of the feedback information of the uplink closed loop transmission diversity is 2 bits and the spreading factor is 256, related parameters of the timeslot structure of the F-DPCH and distribution of the bit number in each field are shown in Table 2; when the bit number of the feedback information of the uplink closed loop transmission diversity is 2 bits and the spreading factor is 128, the related parameters of the timeslot structure of the F-DPCH and the distribution of the bit number in each field are shown in Table 3; when the bit number of the feedback information of the uplink closed loop transmission diversity is 3 bits and the spreading factor is 256, the related parameters of the timeslot structure of the F-DPCH and the distribution of the bit number in each field are shown in Table 4; and when the bit number of the feedback information of the uplink closed loop transmission diversity is 3 bits and the spreading factor is 128, the related parameters of the timeslot structure of the F-DPCH and the distribution of the bit number in each field are shown in Table 5.

**Table 2**

| Timeslot structure #i | Channel bit rate (kbps) | Channel symbol rate (ksps) | Spreading factor | Bit number in each timeslot | Bit number in each timeslot N_{OFF1} | Bit number in each timeslot N_{weight} | Bit number in each timeslot N_{TPC} | Bit number in each timeslot N_{OFF2} |
|---|---|---|---|---|---|---|---|---|
| 0 | 6 | 3 | 256 | 20 | 4 | 2 | 2 | 12 |
| 1 | 6 | 3 | 256 | 20 | 8 | 2 | 2 | 8 |
| 2 | 6 | 3 | 256 | 20 | 12 | 2 | 2 | 4 |
| 3 | 6 | 3 | 256 | 20 | 16 | 2 | 2 | 0 |
| 4 | 6 | 3 | 256 | 20 | 0 | 2 | 2 | 16 |

**Table 3**

| Timeslot structure #i | Channel bit rate (kbps) | Channel symbol rate (ksps) | Spreading factor | Bit number in each timeslot | Bit number in each timeslot N_{OFF1} | Bit number in each timeslot N_{weight} | Bit number in each timeslot N_{TPC} | Bit number in each timeslot N_{OFF2} |
|---|---|---|---|---|---|---|---|---|
| 0 | 6 | 3 | 128 | 40 | 4 | 2 | 2 | 32 |
| 0a | 6 | 3 | 128 | 40 | 4 | 0 | 2 | 32 |
| 0b | 6 | 3 | 128 | 40 | 6 | 0 | 2 | 32 |
| 1 | 6 | 3 | 128 | 40 | 8 | 2 | 2 | 28 |
| 1a | 6 | 3 | 128 | 40 | 8 | 0 | 2 | 28 |
| 1b | 6 | 3 | 128 | 40 | 10 | 0 | 2 | 28 |
| 2 | 6 | 3 | 128 | 40 | 12 | 2 | 2 | 24 |
| 2a | 6 | 3 | 128 | 40 | 12 | 0 | 2 | 24 |
| 2b | 6 | 3 | 128 | 40 | 14 | 0 | 2 | 24 |
| 3 | 6 | 3 | 128 | 40 | 16 | 2 | 2 | 20 |
| 3a | 6 | 3 | 128 | 40 | 16 | 0 | 2 | 20 |
| 3b | 6 | 3 | 128 | 40 | 18 | 0 | 2 | 20 |
| 4 | 6 | 3 | 128 | 40 | 20 | 2 | 2 | 16 |
| 4a | 6 | 3 | 128 | 40 | 20 | 0 | 2 | 16 |
| 4b | 6 | 3 | 128 | 40 | 22 | 0 | 2 | 16 |
| 5 | 6 | 3 | 128 | 40 | 24 | 2 | 2 | 12 |
| 5a | 6 | 3 | 128 | 40 | 24 | 0 | 2 | 12 |
| 5b | 6 | 3 | 128 | 40 | 26 | 0 | 2 | 12 |
| 6 | 6 | 3 | 128 | 40 | 28 | 2 | 2 | 8 |
| 6a | 6 | 3 | 128 | 40 | 28 | 0 | 2 | 8 |
| 6b | 6 | 3 | 128 | 40 | 30 | 0 | 2 | 8 |
| 7 | 6 | 3 | 128 | 40 | 32 | 2 | 2 | 4 |
| 7a | 6 | 3 | 128 | 40 | 32 | 0 | 2 | 4 |
| 7b | 6 | 3 | 128 | 40 | 34 | 0 | 2 | 4 |
| 8 | 6 | 3 | 128 | 40 | 36 | 2 | 2 | 0 |
| 8a | 6 | 3 | 128 | 40 | 36 | 0 | 2 | 0 |
| 8b | 6 | 3 | 128 | 40 | 38 | 0 | 2 | 0 |
| 9 | 6 | 3 | 128 | 40 | 0 | 2 | 2 | 36 |
| 9a | 6 | 3 | 128 | 40 | 0 | 0 | 2 | 36 |
| 9b | 6 | 3 | 128 | 40 | 2 | 0 | 2 | 36 |

**Table 4**

| Timeslot structure #i | Channel bit rate (kbps) | Channel symbol rate (ksps) | Spreading factor | Bit number in each timeslot | Bit number in each timeslot N_{OFF1} | Bit number in each timeslot N_{weight} | Bit number in each timeslot N_{TPC} | Bit number in each timeslot N_{OFF2} |
|---|---|---|---|---|---|---|---|---|
| 0 | 7.5 | 3.75 | 256 | 20 | 5 | 3 | 2 | 10 |
| 1 | 7.5 | 3.75 | 256 | 20 | 10 | 3 | 2 | 5 |
| 2 | 7.5 | 3.75 | 256 | 20 | 15 | 3 | 2 | 0 |
| 3 | 7.5 | 3.75 | 256 | 20 | 0 | 3 | 2 | 15 |

**Table 5**

| Timeslot structure #i | Channel bit rate (kbps) | Channel symbol rate (ksps) | Spreading factor | Bit number in each timeslot | Bit number in each timeslot N_{OFF1} | Bit number in each timeslot N_{weight} | Bit number in each timeslot N_{TPC} | Bit number in each timeslot N_{OFF2} |
|---|---|---|---|---|---|---|---|---|
| 0 | 7.5 | 3.75 | 128 | 40 | 5 | 3 | 2 | 30 |
| 1 | 7.5 | 3.75 | 128 | 40 | 10 | 3 | 2 | 25 |
| 2 | 7.5 | 3.75 | 128 | 40 | 15 | 3 | 2 | 20 |
| 3 | 7.5 | 3.75 | 128 | 40 | 20 | 3 | 2 | 15 |
| 4 | 7.5 | 3.75 | 128 | 40 | 25 | 3 | 2 | 10 |
| 5 | 7.5 | 3.75 | 128 | 40 | 30 | 3 | 2 | 5 |
| 6 | 7.5 | 3.75 | 128 | 40 | 35 | 3 | 2 | 0 |
| 7 | 7.5 | 3.75 | 128 | 40 | 0 | 3 | 2 | 35 |

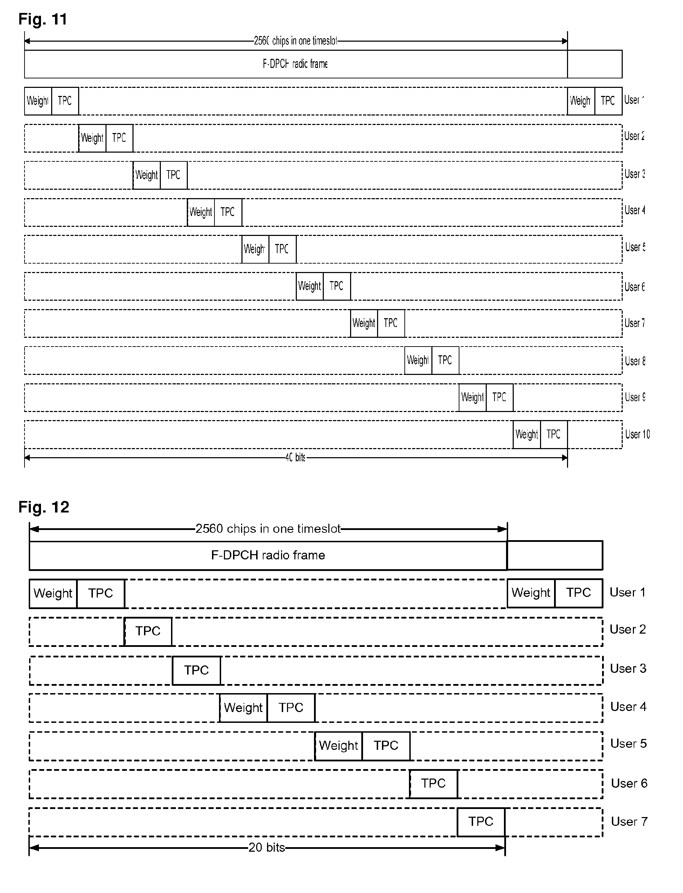

The feedback weight of the uplink closed loop transmission diversity is represented by weight, and the TPC command is represented by TPC; Fig. 10 and Fig. 11 show schematic time sequences in which the weight is transmitted before the TPC by time division multiplexing, and it can refer to Figs. 4 to 9 that, by exchanging the positions of the weight and the TPC, both schematic time sequences in which the TPC is transmitted before the weight by time division multiplexing and schematic time sequences in which the weight and the TPC are transmitted alternately by time division multiplexing can be obtained. As shown in Fig. 10, when the bit number of the feedback weight of the uplink closed loop transmission diversity is 2 bits, namely, a 4-weight feedback codebook is selected, the bit number of the weight of each user is 2 bits, which occupy 4 bits in total with 2 bits of the TPC command; and if the spreading factor is 256, 20 bits in a timeslot can be shared by 5 users needing the feedback weight without causing the information of the users to be overlapped in a timeline. If the spreading factor is 128, as shown in Fig. 11, 40 bits in a timeslot can still be shared by at most 10 users needing the feedback weight without causing the information of the users to be overlapped in a timeline.

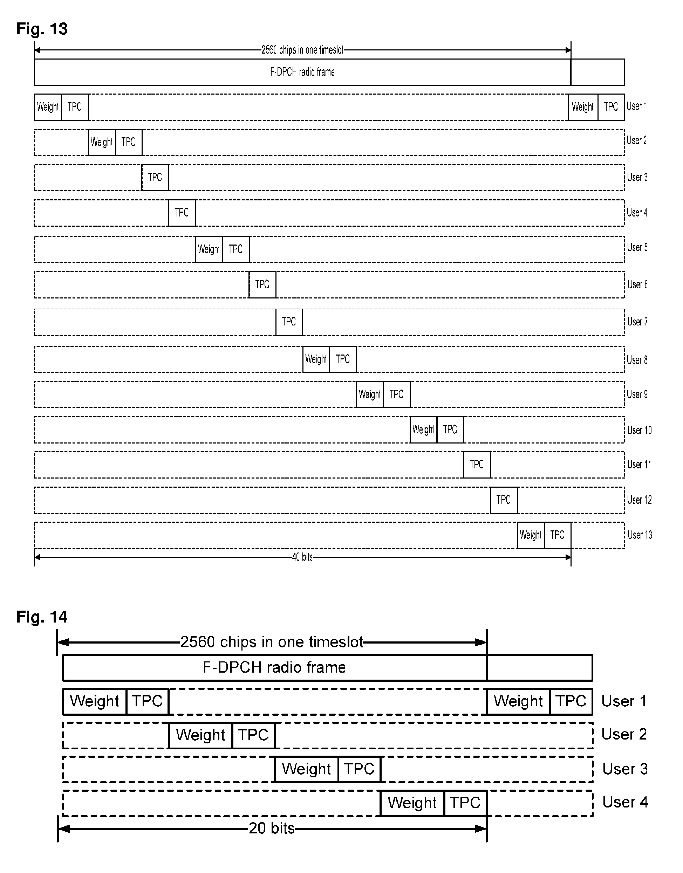

Fig. 12 is a schematic diagram showing time division multiplexing by which the F-DPCH is shared by multiple users when a 4-weight feedback codebook is selected and the spreading factor is 256, wherein information fed back to different users is different. In the embodiment, the information fed back to user 1, user 4 and user 5 includes feedback weights of the uplink closed loop transmission diversity and TPC commands and correspond to timeslot structures #4, #1 and #2 in Table 2 respectively; and the information fed back to user 2, user 3, user 6 and user 7 only includes TPC command and correspond to timeslot structures #2, #3, #8 and #9 in Table 1 respectively. Downlink spreading code resources and base station transmitted power resources can be further saved by the embodiment. The implementation way is also available when the spreading factor is 128, as shown in Fig. 13, when a 4-weight feedback codebook is selected and the spreading factor is 128, the information fed back to user 1, user 2, user 5, user 8, user 9, user 10 and user 13 includes feedback weights of the uplink closed loop transmission diversity and TPC commands and correspond to timeslot structures #9, #0, #2, #4, #5, #6 and #8 in Table 3 respectively; and the information fed back to user 3, user 4, user 6, user 7, user 11 and user 12 only includes TPC commands and correspond to timeslot structures #1a, #1b, #3a, #3b, #7a and #7b in Table 3 respectively.

When the bit number of the feedback weight of the uplink closed loop transmission diversity is 3 bits, namely, an 8-weight feedback codebook is selected and the spreading factor is 256, related parameters of a timeslot structure of the F-DPCH and a distribution of the bit number in each field are shown in Table 4; and when the bit number of the feedback weight of the uplink closed loop transmission diversity is 3 bits, namely, an 8-weight feedback codebook is selected and the spreading factor is 128, related parameters of a timeslot structure of the F-DPCH and a distribution of the bit number in each field are shown in Table 5.

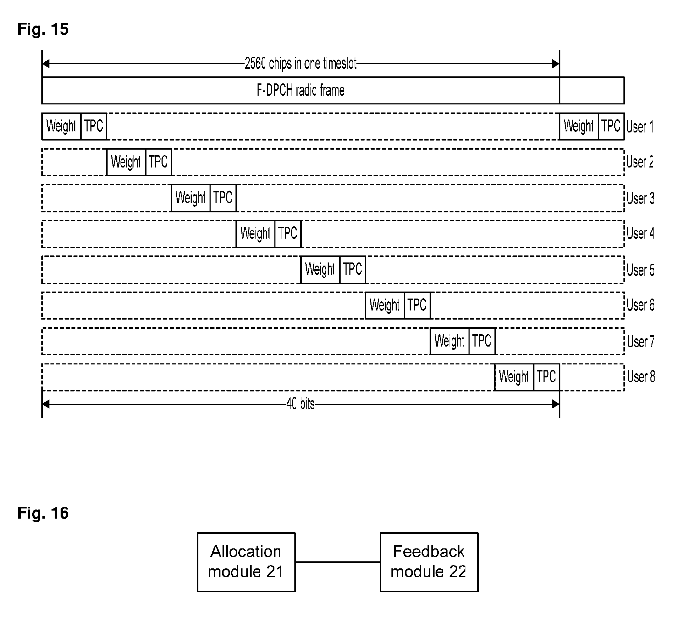

The feedback weight of the uplink closed loop transmission diversity is represented by weight, and the TPC command is represented by TPC; Fig. 14 and Fig. 15 show schematic time sequences in which the weight is transmitted before the TPC by time division multiplexing, and it can refer to Figs. 4 to 9; and by exchanging the positions of the weight and the TPC, both schematic diagrams showing that the TPC is transmitted before the weight by time division multiplexing and schematic diagrams showing that the weight and the TPC are transmitted alternately by time division multiplexing can be obtained. When a feedback weight codebook is 8 weights, the bit number of the weight of each user is 3 bits, which occupy 5 bits in total with 2 bits of the TPC command; and if the spreading factor is 256, as shown in Fig. 14, 20 bits in a timeslot can be shared by 4 users needing the feedback weight without causing the information of the users to be overlapped in a timeline. If the spreading factor is 128, as shown in Fig. 15, 40 bits in a timeslot can be shared by 8 users needing the feedback weight without causing the information of the users to be overlapped in a timeline.

To implement the method above, the present disclosure also provides an information feedback device for the uplink closed loop transmission diversity, as shown in Fig. 16, which includes: an allocation module 21 and a feedback module 22, wherein
the allocation module 21 is configured to allocate each F-DPCH to at least one user; and
the feedback module 22 is configured to take at least one F-DPCH as a feedback channel and arrange information of different users in each said F-DPCH by time division multiplexing, wherein information of at least one user in the F-DPCH includes feedback information of the uplink closed loop transmission diversity and an uplink TPC command.

Here, the feedback information of the uplink closed loop transmission diversity is generally a feedback weight of the uplink closed loop transmission diversity; and
the feedback module 22 is further configured to transmit the feedback information of the uplink closed loop transmission diversity and the uplink TPC command of the same user one after another.

The feedback module 22 configured to transmit the feedback information of the uplink closed loop transmission diversity and the uplink TPC command of the same user one after another, specifically includes: the feedback module 22 configured to transmit the feedback information of the uplink closed loop transmission diversity before the uplink TPC command;
the feedback module 22 configured to transmit the feedback information of the uplink closed loop transmission diversity and the uplink TPC command of the same user one after another, specifically includes: the feedback module 22 configured to transmit the uplink TPC command before the feedback information of the uplink closed loop transmission diversity; and
the feedback module 22 configured to transmit the feedback information of the uplink closed loop transmission diversity and the uplink TPC command of the same user one after another, specifically includes: the feedback module 22 configured to transmit bits of the feedback information of the uplink closed loop transmission diversity and bits of the TPC command alternately.

The feedback module 22 is further configured to transmit the F-DPCH according to a timing reference signal to feed back the feedback information of the uplink closed loop transmission diversity and the uplink TPC command to at least one user.

### INDUSTRIAL APPLICABILITY

By means of the solution of the present disclosure, information feedback of uplink closed loop transmission diversity can be implemented, and an existing downlink physical channel is effectively reused to bear feedback information without causing an extra resource overhead. According to the present method, bits in the channel can be fully utilized by arranging newly introduced feedback information and original information in the channel one after another, thus not only the system design is simplified, but also the maximum number of users can be born in one timeslot. The method also considers compatibility with an original protocol, and keeps the number of users which can be born by a multiplexing channel in one timeslot not to change dramatically as much as possible by reducing the spreading factor of the channel.

The above are only the preferred embodiments of the present disclosure and are not intended to limit the scope of protection of the present disclosure, and any modifications, equivalent replacements, improvements and the like within the concept and principle of the present disclosure shall fall within the scope of protection of the present disclosure.

## Claims

1. An information feedback method for uplink closed loop transmission diversity, comprising:
allocating, by a base station, each Fractional Dedicated Physical Channel (F-DPCH) to at least one user; and
taking, by the base station, at least one F-DPCH as a feedback channel and arranging information of different users in each said F-DPCH by time division multiplexing, wherein information of at least one user in the F-DPCH comprises feedback information of the uplink closed loop transmission diversity and an uplink Transmission Power Control (TPC) command.

2. The information feedback method according to claim 1, wherein the feedback information of the uplink closed loop transmission diversity comprises a feedback weight of the uplink closed loop transmission diversity.

3. The information feedback method according to claim 1 or 2, wherein a spreading factor of the F-DPCH is 128 or 256; and
a bit number of the feedback information of the uplink closed loop transmission diversity is 2 or 3 bits.

4. The information feedback method according to claim 1, further comprising:
transmitting, by the base station, the feedback information of the uplink closed loop transmission diversity and the uplink TPC command of the same user one after another.

5. The information feedback method according to claim 4, wherein the transmitting the feedback information of the uplink closed loop transmission diversity and the uplink TPC command of the same user one after another comprises:
transmitting the feedback information of the uplink closed loop transmission diversity before the uplink TPC command;
or, transmitting the uplink TPC command before the feedback information of the uplink closed loop transmission diversity;
or, transmitting bits of the feedback information of the uplink closed loop transmission diversity and bits of the TPC command alternately.

6. The information feedback method according to claim 1, further comprising:
transmitting, by the base station, the F-DPCH according to a timing reference signal.

7. An information feedback device for uplink closed loop transmission diversity, comprising: an allocation module and a feedback module; wherein
the allocation module is configured to allocate each Fractional Dedicated Physical Channel (F-DPCH) to at least one user; and
the feedback module is configured to take at least one F-DPCH as a feedback channel and arrange information of different users in each said F-DPCH by time division multiplexing, wherein information of at least one user in the F-DPCH comprises feedback information of the uplink closed loop transmission diversity and an uplink Transmission Power Control (TPC) command.

8. The information feedback device according to claim 7, wherein the feedback module is further configured to transmit the feedback information of the uplink closed loop transmission diversity and the uplink TPC command of the same user one after another.

9. The information feedback device according to claim 8, wherein the feedback module is specifically configured to transmit the feedback information of the uplink closed loop transmission diversity before the uplink TPC command;
or, transmit the uplink TPC command before the feedback information of the uplink closed loop transmission diversity;
or, transmit bits of the feedback information of the uplink closed loop transmission diversity and bits of the TPC command alternately.

10. The information feedback device according to claim 7, wherein the feedback module is further configured to transmit the F-DPCH according to a timing reference signal.
